# EUROPÄISCHE PATENTSCHRIFT

(11) **EP 4 361 588 B1**
(45) Veröffentlichungstag und Bekanntmachung des Hinweises auf die Patenterteilung: **17.09.2025**
(21) Anmeldenummer: 23000056.4
(22) Anmeldetag: 11.04.2023
(51) Int. Cl.: G01M 3/18, B65D 90/24, B65D 90/50

(54) **VORRICHTUNG ZUR LECKAGE-ERKENNUNG AN FLÜSSIGKEITSBEHÄLTERN MIT GRUNDWASSERGEFÄHRDENDEN FLÜSSIGKEITSINHALTEN**
DEVICE FOR DETECTING LEAKS IN LIQUID CONTAINERS WITH LIQUID CONTENTS AT RISK OF GROUND WATER
DISPOSITIF DE DÉTECTION DE FUITES DANS DES RÉSERVOIRS DE LIQUIDE AVEC DES LIQUIDES DANGEREUX POUR LES EAUX SOUTERRAINES

(30) Priorität: 27.10.2022 DE 102022004024
(43) Veröffentlichungstag der Anmeldung: 01.05.2024
(73) Patentinhaber: Jochen Pohl, 09120 Chemnitz (DE)
(72) Erfinder: Pohl, Jochen, D-09120 Chemnitz (DE)
(74) Vertreter: Auerbach, Bettina

(56) Entgegenhaltungen:
- WO-A1-99/50635
- WO-A2-2014/027208
- DE-U1- 202007 008 064
- JP-A- S5 968 639

## Beschreibung

Die Erfindung betrifft eine Vorrichtung zur Leckage-Erkennung an für oberirdischen, erdeingelassenen und unterirdischen Flüssigkeitsbehältern, welche mit Flüssigkeiten befüllt sind, die bei unkontrolliertem Austritt das Grundwasser gefährden würden. Hierzu zählen unter anderem Güllekeller, Güllewannen, Güllekanäle und Erdbecken zur Lagerung von Jauche, Gülle und Silage-Sickersäften. Insbesondere bei Biogasanlagen ist es notwendig, derartige Leckage-Erkennungen und -Überwachungen in regelmäßigen und engmaschigen Intervallen durchzuführen, soweit diese mit wassergefährdenden Substraten befüllt sind.

Eine Vorrichtung dieser Art ist bereits aus der DE 20 2018 000 073 U1 bekannt. Hier wird ein Überwachungssystem für oberirdische, erdeingelassene und unterirdische Behälter Güllekeller, Güllewannen, Güllekanäle und Erdbecken zur Lagerung von Jauche, Gülle und Silage-Sickersäften, sowie für Behälter von Biogasanlagen, die mit wassergefährdenden Substraten befüllt sind, beschrieben. Durch die Installation von elektrischen Messonden (Elektroden), welche um und unter dem Behälter verteilt im Boden eingebracht werden und gegebenenfalls in Kombination mit einer Innenelektrode, die in der Flüssigkeit des Behälters eingetaucht ist, wird ein geoelektrisches Monitoring zur Leckage-Erkennung durchgeführt. Dabei wird zwischen zwei Elektroden ein Strom induziert und die Potentialdifferenz zwischen zwei weiteren Potentialelektroden gemessen und in Vergleich gesetzt.

An sich eine gute Möglichkeit, über das geoelektrische Monitoring Rückschlüsse auf Leckagen zu ermöglichen. Das System birgt jedoch den Nachteil in sich, dass witterungsbedingte Veränderungen der Bodenbeschaffenheit die Ergebnisse ständig verändern und so nicht korrekt und zuverlässig auf eventuelle Leckagen rückgeschlossen werden kann.

Der spezifische elektrische Widerstand eines Bodens wird durch verschiedene Einflussparameter bestimmt, wie in der o.g. Schrift richtigerweise dargelegt wird. Aber auch die witterungsbedingten Veränderungen des Bodens durch Regeneinflüsse, Austrocknen und Rissbildung verändern den elektrischen Widerstand des Bodens ständig, ebenso wie die Kondensatbildung in den Kontrollschächten, welche durch ihre Nähe zur Messsonde erheblichen Einfluss auf die Messergebnisse haben.

Es ist deshalb Aufgabe der Erfindung, diese Einflussfaktoren auf das Messergebnis weitestgehend auszuschließen und eine Lösung zu schaffen, mit der es möglich ist zuverlässig und korrekt Leckagen eines Flüssigkeitsbehälters zu erkennen, um zeitnah auf diese reagieren zu können, um die Umwelt und das Grundwasser gegenüber dem Austritt der wassergefährdenden Flüssigkeit zurechtzeitig zu schützen. Die neue Lösung soll zuverlässig, effektiv aber auch kostengünstig arbeiten, um die Leckage örtlich definiert am Behälter erkennen zu können.

Erfindungsgemäß wird die Aufgabe durch die Merkmale des Patentanspruchs 1 gelöst, wobei die vorteilhaften Ausgestaltungen in den Unteransprüchen beschrieben sind.

Danach besteht die erfindungsgemäße Vorrichtung zur Leckage-Erkennung an Flüssigkeitsbehältern mit, das Grundwasser gefährdenden Flüssigkeitsinhalten zunächst aus den am und im Flüssigkeitsbehälter angeordneten Überwachungselektroden. Diese werden zeitgleich mit einer gleichen definierten elektrischen Ladung beaufschlagt, um die Potentialdifferenz zwischen jeweils der im Behälter angeordneten Überwachungselektrode mit jeweils einer Überwachungselektrode, welche außerhalb des Behälters angeordnet ist, zu messen und auszuwerten. Dazu ist mindestens eine Überwachungselektrode zur Messung der elektrischen Leitfähigkeit der Flüssigkeit im Flüssigkeitsbehälter angeordnet und es sind außerhalb des Behälters und dort an der Außenwand des Behälters mehrere gleichmäßig verteilt und vertikal angeordnete Kontrollschächte angeordnet, in denen jeweils mindestens eine Überwachungselektrode angeordnet ist.

Der spezifische elektrische Widerstand eines Bodens wird durch verschiedene Einflussparameter bestimmt, wie in der o.g. Schrift richtigerweise dargelegt wird. Aber auch die witterungsbedingten Veränderungen des Bodens durch Regeneinflüsse, Austrocknen und Rissbildung verändern den elektrischen Widerstand des Bodens ständig, ebenso wie die Kondensatbildung in den Kontrollschächten, welche durch ihre Nähe zur Messsonde erheblichen Einfluss auf die Messergebnisse haben.

In der DE 20 2007 008 064 U1 wird eine Behälteranordnung zur Aufnahme von zumindest Flüssigkeit absondernden Material beschrieben. Diese Behälteranordnung weist eine weitgehend horizontale Bodenplatte und einer auf dieser fußenden, sich weitgehend in Lotrichtung erstreckenden, umlaufenden Wandung, und mit einer umlaufenden Drainageleitung als Detektor für aus dem Behälter austretenden Flüssigkeit auf, wobei die Drainageleitung oberhalb der Bodenplatte angeordnet ist und mindestens einen Kontrollschacht aufweist. Eine Leckage kann somit über den Kotrollschacht sichtbar gemacht werden. Diese Möglichkeit der Leckageerkennung erfordert ständige Kontrollgänge zur Besichtigung der Kontrollschächte und birgt die Gefahr in sich, dass eine Leckage zu spät erkannt wird, wenn die Kontrollgänge nicht engmaschig genug organsiert sind.

Es ist deshalb Aufgabe der Erfindung, diese Einflussfaktoren auf das Messergebnis weitestgehend auszuschließen und eine Lösung zu schaffen, mit der es möglich ist, zuverlässig und korrekt und zeitnah Leckagen eines Flüssigkeitsbehälters zu erkennen, um zeitnah auf diese reagieren zu können, um die Umwelt und das Grundwasser gegenüber dem Austritt der wassergefährdenden Flüssigkeit zurechtzeitig zu schützen. Die neue Lösung soll zuverlässig, effektiv aber auch kostengünstig arbeiten, um die Leckage örtlich definiert am Behälter erkennen zu können. Dabei soll die Flüssigkeit im Behälter als auch die Flüssigkeit in den Kontrollschächten überwacht und ausgewertet werden.

Erfindungsgemäß wird die Aufgabe durch die Merkmale des Patentanspruchs 1 gelöst, wobei die vorteilhaften Ausgestaltungen in den Unteransprüchen beschrieben sind.

Danach besteht die erfindungsgemäße Vorrichtung zur Leckage-Erkennung an Flüssigkeitsbehältern mit, das Grundwasser gefährdenden Flüssigkeitsinhalten zunächst aus den am und im Flüssigkeitsbehälter angeordneten Überwachungselektroden. Diese werden zeitgleich mit einer gleichen definierten elektrischen Ladung beaufschlagt, um die Potentialdifferenz zwischen jeweils der im Behälter angeordneten Überwachungselektrode mit jeweils einer Überwachungselektrode, welche außerhalb des Behälters angeordnet ist, zu messen und auszuwerten. Dazu ist mindestens eine Überwachungselektrode zur Messung der elektrischen Leitfähigkeit der Flüssigkeit im Flüssigkeitsbehälter angeordnet und es sind außerhalb des Behälters und dort an der Außenwand des Behälters mehrere gleichmäßig verteilt und vertikal angeordnete Kontrollschächte angeordnet, in denen jeweils mindestens eine Überwachungselektrode angeordnet ist.

Im unteren Bereich des Flüssigkeitsbehälters ist ein um die gesamte Peripherie des Behälterbodens bzw. um den unteren Bereich der Behälterbodenplatte verlaufender Ringschacht zur Aufnahme von Leckagen angeordnet. Dabei verlaufen die um die Behälterwand direkt oder im Abstand zu dieser angeordneten Kontrollschächte bis zum unteren Bodenbereich des Behälterbodens und münden im Bereich des Ringschachtes. Der Ringschacht ist mit einem Verbindungsrohr mit dem Kontrollschacht zur Ableitung der gesammelten Leckagen in den Kontrollschacht verbunden, wo im unteren Bereich des Kontrollschachtes wenigstens eine Überwachungselektrode zur Messung der elektrischen Leitfähigkeit der an dieser Stelle sich angesammelten Flüssigkeit angeordnet ist.

Der Ringschacht ist in einer Ausführungsvariante für das Nachrüsten von bereits vorhandenen Flüssigkeitsbehältern zur rechtzeitigen Erkennung von Leckagen und zur Vermeidung des Eindringens der Leckagen in den Bodenbereich nach oben offen jedoch mit der Behälteraußenwand umlaufend flüssigkeitsdicht verbunden. Dadurch wird gewährleistet, dass die Leckage von der Behälterwand direkt in den Ringschacht läuft, ohne dass diese Leckage durch umweltbeeinflusste Flüssigkeit vermischt wird. Von dort wird die Leckage über das Verbindungsrohr in den Kontrollschacht geführt, wo die Kontrollmessungen mittels der dort angeordneten Messsonden stattfindet.

In einer weiteren Ausführungsform für das Nachrüsten von bereits vorhandenen Flüssigkeitsbehältern mit grundwassergefährdenden Flüssigkeitsinhalten kann der Ringschacht als ein nach unten abgedichtetes Drainagerohr ausgebildet sein, wobei das Drainagerohr im abgedichteten unteren Bereich mit der Behälteraußenwand umlaufend und flüssigkeitsdicht verbunden angeordnet ist. Damit wird vermieden, dass Leckagen unterhalb des als Drainagerohr ausgebildeten Ringschachtes in das ungeschützte Erdreich gelangen.

Der Ringschacht kann auch aus einer muldenförmig ausgebildeten flüssigkeitsdichten Folie ausgebildet sein, welche mit der Behälteraußenwand umlaufend und flüssigkeitsdicht verbunden ist. Auch hierbei ist der Ringschacht mit dem Kontrollschacht über ein Verbindungsrohr zum Abtransport der Leckage in den Kontrollschacht verbunden.

Es ist auch möglich, dass der Ringschacht aus einer elektrisch leitfähigen Folie ausgebildet ist oder der Ringschacht in seinem Inneren mit dieser Folie ausgelegt oder beschichtet ist und an dieser Folie örtlich definiert elektrische Messsonden zur Leckageerkennung über nach Außen verlegte Verbindungskabel, welche mit einer Auswerteeinheit in Verbindung stehen, positioniert angeordnet sind. Der Kontrollschacht kann bei dieser Variante entfallen, da die Messungen direkt im Ringschacht durchgeführt werden können, ohne dabei das Erdreich um den Flüssigkeitsbehälter bei Leckagen zu gefährden.

Ebenso sieht die Erfindung vor, dass der Ringschacht im Innenbereich mit einem Vlies zum Aufsaugen von Leckagen ausgelegt oder beschichtet ist. Dabei sind an diesem Vlies örtlich definierte elektrische Messsonden zur Leckageerkennung über nach Außen verlegte Verbindungskabel, welche mit einer Auswerteeinheit in Verbindung stehen, positioniert angeordnet. Auch bei dieser Variante kann der Kontrollschacht, da die Messungen direkt im Ringschacht durchgeführt werden können, ohne dabei das Erdreich um den Flüssigkeitsbehälter bei Leckagen zu gefährden.

Für nachzurüstende bereits gebaute Flüssigkeitsbehälter sieht die Erfindung vor, dass an der äußeren Peripherie der Behälteraußenwand und um den Behälter umlaufend ein Drainagevlies mit einer darüber angeordneten Leckerkennungsfolie so fest angeordnet sind, dass die oberen Randbereiche von Leckerkennungsfolie und Drainagevlieses umlaufend fest und mit einer flüssigkeitsdichten Verbindung mit der Behälterwand verbunden sind. Mit den unteren Randbereichen von Leckerkennungsfolie und Drainagevlieses münden diese zur Abführung von Leckagen im oberen Bereich des Ringschachtes, welcher wiederum über das Verbindungsrohr mit dem Kontrollschacht bzw. Schächten in Verbindung steht.

Für neu zu bauende Flüssigkeitsbehälter sieht die Erfindung vor, unter dem Behälterboden des Flüssigkeitsbehälters bis hin zur oberhalb des als Drainagerohr ausgebildeten Ringschachtes verlaufenden äußeren Peripherie der Behälteraußenwand und um den Behälter umlaufend ein Drainagevlies und einer darunter und im Randbereich nach außen sichtbar angeordneten Leckerkennungsfolie fest anzuordnen. Die Anordnung ist dabei do fest und dicht, dass die oberen Randbereiche von Leckerkennungsfolie und des Drainagevlieses umlaufend fest und flüssigkeitsdicht mit der Behälterwand verbunden sind. Dadurch wird eine sogenannte flüssigkeitsdichte Wanne unter und um den Flüssigkeitsbehälter ausgebildet, welche im Falle von Leckagen diese von der Wanne aufgefangen wird, die Leckage über den Ringschacht und dem Verbindungsrohr an den Kontrollschacht weitergeleitet wird und dort von den dort angeordneten Messonden erkannt und angezeigt wird.

Damit wird für die Leckageerkennung an Flüssigkeitsbehältern, welche mit Flüssigkeiten gefüllt sind, welche das Grundwasser gefährden, eine Lösung geschaffen, mit deren Hilfe, sowohl bei schon vorhandenen Flüssigkeitsbehältern eine Kontrollvorrichtung nachgerüstet werden kann als auch bei neu zu bauenden Flüssigkeitsbehältern eine kostengünstige und zuverlässige Lösung geschaffen werden kann, die bei Leckagen den Eintritt dieser in das Erdreich verhindern und die Leckage zeitnah nicht nur erkannt werden kann, sondern auch die Lokalität der Leckage bestimmt werden kann. Damit kann zeitnah auf die entstandene Leckage reagiert werden, um einen Schaden für die Umwelt rechtzeitig abwenden zu können.

Die Erfindung soll anhand von Ausführungsbeispielen näher erläutert werden.

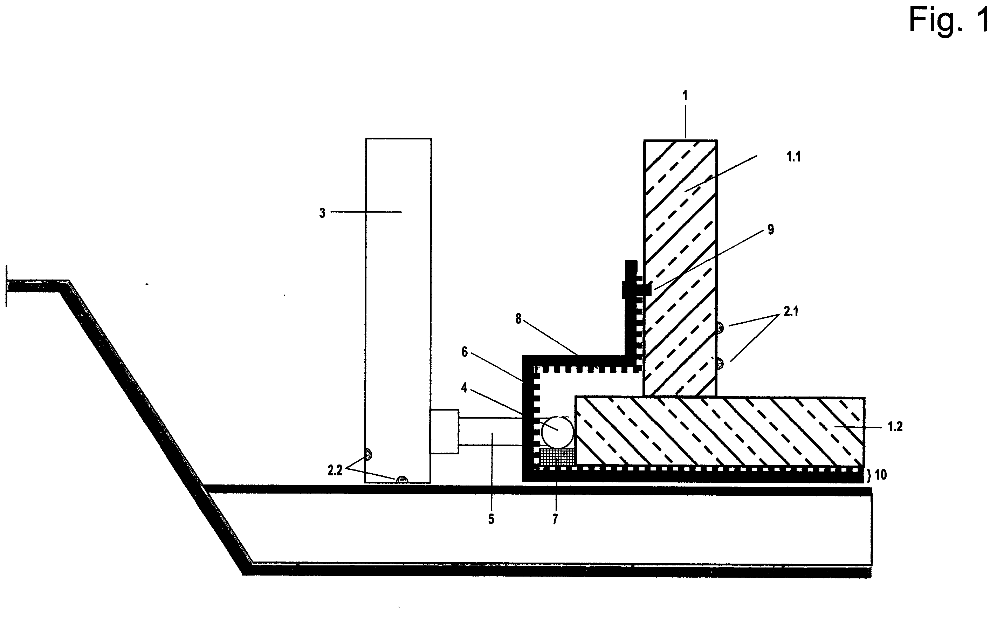

In den beigefügten Zeichnung zeigen
- Fig. 1: eine schematische Schnittdarstellung durch einen Flüssigkeitsbehälter mit umlaufendem Ringschacht mit Anschlussrohr an einen der Kontrollschächte sowie einer aus Drainagevlies und flüssigkeitsdichter Folie gebildeten Auffangwanne für Leckagen für neu zu bauende Behälter;

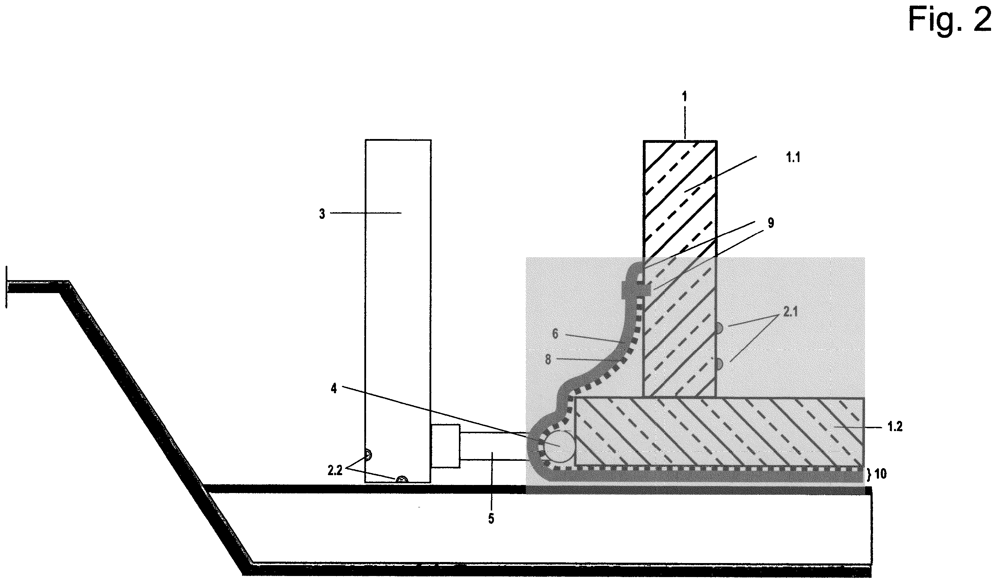

- Fig. 2: eine schematische Schnittdarstellung durch einen Flüssigkeitsbehälter mit umlaufendem Ringschacht mit einer nach oben offenen und nach unten geschlossenen Ringschacht-Wandung mit Anschlussrohr an einen der Kontrollschächte sowie einer im unteren Außenwandbereich des Flüssigkeitsbehälters angeordneten Kombination aus Drainagevlies und flüssigkeitsdichten Folienmantel, welche eine geschlossene Auffangwanne bilden;

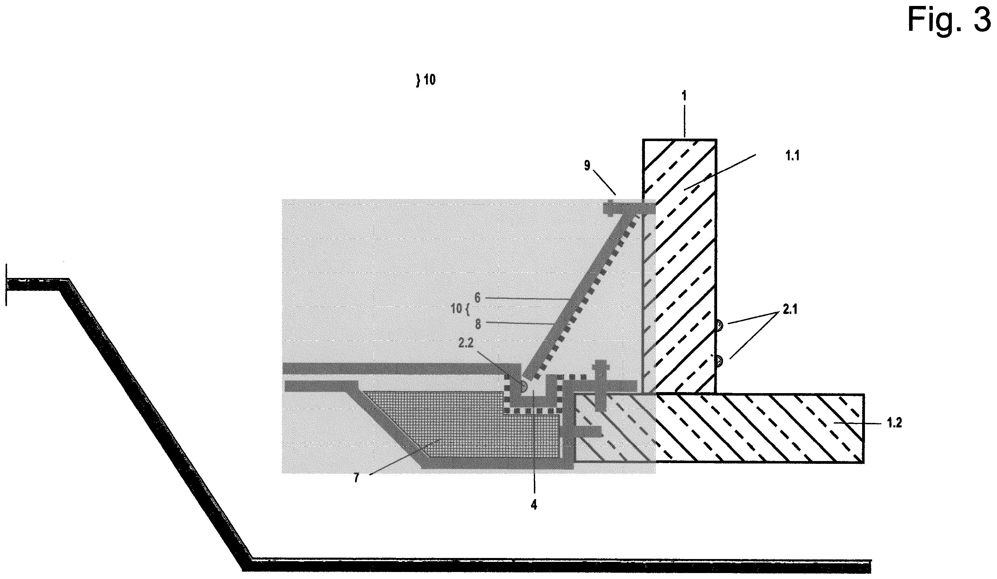

- Fig. 3: eine schematische Schnittdarstellung durch einen Flüssigkeitsbehälter mit umlaufendem Ringschacht und einer im unteren Außenwandbereich des Flüssigkeitsbehälters angeordneten Kombination aus Drainagevlies und flüssigkeitsdichten Leckerkennungsfolienmantel, welche in dem Ringschacht umlaufend münden.

### Ausführungsbeispiel 1

Für einen neu zu errichtenden Flüssigkeitsbehälter 1 wird gemäß der Figur 2 für eine Leckageerkennung unter der Bodenplatte 1.2 eine flüssigkeitsdichte Folie 6 und ein darüber angeordnetes flächendeckendes Vlies 8 angeordnet. Das Vlies 8 dient dem mechanischen Schutz der Folie 6 und ist auch in der Lage geringe Mengen von Leckagen aufzusaugen. Die Fläche von Vlies 8 und Folie 6 ist so groß, dass beim Bau des Behälters die Randbereiche von Beiden 8, 6 bis über den Randbereich des Flüssigkeitsbehälterbodens 1.2 und den unteren Bereich der Behälterwand 1.1 umgelegt und mittels einer flüssigkeitsdichten Verbindung 9 an der Behälterwand befestigt werden können. Die Befestigung erfolgt flüssigkeitsdicht, so dass das Eindringen von klimabedingtem Wasser oder Feuchtigkeit weitestgehend verhindert wird und die Anordnung von Vlies und Folie eine flüssigkeitsdichte Wanne 10 bilden. Es besteht auch die Möglichkeit in den Hohlräumen der Wanne ein aufsaugendes Drainagematerial anzuordnen, um übergelaufene Leckagen aufzusaugen und zu binden. Da neben der Bodenplatte 1.2 ein um die Peripherie des Flüssigkeitsbehälterbodens 1.2 verlaufender Ringschacht 4 angeordnet ist, ist dieser durch die Anordnung der Folie 6 und des Vlieses 8 innerhalb der flüssigkeitsdichten Wanne angeordnet. Der Ringschacht 4 ist in diesem Fall als ein Drainagerohr ausgebildet, so dass dieser, eventuell entstandene Leckagen sicher aufnehmen kann. Der Ringschacht 4 ist über wenigstens ein Anschlussrohr 5 mit einem außerhalb der flüssigkeitsdichten Wanne 10 angeordneten Kontrollschacht 3 verbunden. Dadurch können die im Ringschacht 4 gesammelten Leckagen über das Verbindungsrohr 5 zum Kontrollschacht 3 weitergeleitet werden. Für die Überwachung der Dichtheit des Flüssigkeitsbehälters 1 sind Überwachungselektroden 2 im System angeordnet. Im Kontrollschacht 3 sind die Überwachungselektroden 2.2 zur Messung des Spannungspotential der dort angesammelten Flüssigkeit angeordnet. Ebenso sind im Flüssigkeitsbehälter 1 Überwachungselektroden 2.1 zur Messung des Spannungspotential der dort angesammelten Flüssigkeit angeordnet. Beide Elektrodentypen 2.1 und 2.2 werden für eine Kontrollmessung gleichzeitig mit einer gleichen definierten Spannung beaufschlagt, um in einer außerhalb des Behälters angeordneten Auswerteeinheit die Potentialdifferenz zwischen den beiden überwachten Flüssigkeiten zu messen. Bei einer bestimmten Potentialdifferenz kann vom Vorhandensein einer Leckage ausgegangen werden und zeitnah auf dieses Ereignis reagiert werden, um Umweltschäden zu vermeiden. Für die Überwachung werden mehrere Kontrollschächte 3 um den Behälter angeordnet, so dass auch eine Leckage schnell und unkompliziert lokal bestimmt werden kann.

Mit dieser Lösung ist eine Möglichkeit geschaffen, kostengünstig eine Behälterwanne zu bauen, welche einen zuverlässigen Schutz vor dem Eindringen von Behälter-Leckage-Material in das Erdreich bietet. Gleichzeitig ist ein System geschaffen worden, welches die ständige und zuverlässige sowie unkomplizierte Kontrolle des Flüssigkeitsbehälters 1 zu seiner Dichtheit und die Lokalisierung des Lecks erlaubt.

Diese Variante ist hervorragend geeignet für den Neubau eines Flüssigkeitsbehälters, dessen Inhalt nicht in Berührung mit dem Erdreich kommen darf.

### Ausführungsbeispiel 2:

Für einen bereits vorhandenen Flüssigkeitsbehälter 1 für grundwassergefährdende Flüssigkeiten wird gemäß Fig. 1 für eine Leckageerkennung vorgeschlagen, dass der Flüssigkeitsbehälter1, bestehend aus Behälterboden 1.2 und Behälterwand 1.1, welche flüssigkeitsdicht miteinander verbunden sind, neben der Bodenplatte 1.2 ein Ringschacht 4 angeordnet ist. Dieser Ringschacht 4 ist umlaufend um den Flüssigkeitsbehälterboden 1.2 direkt neben der Bodenplatte fest verbunden angeordnet. Der Ringschacht 4 mit einer in diesem Fall nach oben offene, wenigstens perforierten Wandung weist nach unten eine geschlossene und flüssigkeitsdichte Wandung auf. Der Ringschacht 4 ist mit wenigstens einen Zugang zu wenigstens einem Verbindungsrohr 5 verbunden, welches wiederum mit einem der Kontrollschächte 3 in Verbindung steht. Für die Überwachung der Dichtheit des Flüssigkeitsbehälters 1 sind Überwachungselektroden 2 im System angeordnet. Im Kontrollschacht 3 sind die Überwachungselektroden 2.2 zur Messung des Spannungspotential der dort angesammelten Flüssigkeit angeordnet. Ebenso sind im Flüssigkeitsbehälter 1 Überwachungselektroden 2.1 zur Messung des Spannungspotential der dort angesammelten Flüssigkeit angeordnet. Beide Elektrodentypen 2.1 und 2.2 werden für eine Kontrollmessung gleichzeitig mit einer gleichen definierten Spannung beaufschlagt, um in einer außerhalb des Behälters angeordneten Auswerteeinheit die Potentialdifferenz zwischen den beiden überwachten Flüssigkeiten zu messen. Bei einer bestimmten Potentialdifferenz kann vom Vorhandensein einer Leckage ausgegangen werden und zeitnah auf dieses Ereignis reagiert werden, um Umweltschäden zu vermeiden.

Für die Überwachung werden mehrere Kontrollschächte 3 um den Behälter angeordnet, so dass auch eine Leckage schnell und unkompliziert lokal bestimmt werden kann.

Auch mit dieser Lösung ist eine Möglichkeit geschaffen, kostengünstig eine Behälterwanne zu bauen, welche einen zuverlässigen Schutz vor dem Eindringen von Behälter-Leckage-Material in das Erdreich bietet. Gleichzeitig ist ein System geschaffen worden, welches die ständige und zuverlässige sowie unkomplizierte Kontrolle des Flüssigkeitsbehälters 1 zu seiner Dichtheit und die Lokalisierung des Lecks erlaubt.

Auch diese Variante ist hervorragend geeignet für den Neubau eines Flüssigkeitsbehälters, dessen Inhalt nicht in Berührung mit dem Erdreich kommen darf.

### Ausführungsbeispiel 3

Mit der in Figur 3 dargestellten Variante zur Leckage-Erkennung an Flüssigkeitsbehältern mit grundwassergefährdenden Flüssigkeitsinhalten besteht die Möglichkeit, auch bei schon vorhandenen Flüssigkeitsbehälterbauten eine Leckageerkennung nachzurüsten.

Hierzu wird neben der Flüssigkeitsbehälter-Bodenplatte 1.2 und umlaufender Ringschacht 4 angeordnet. Dieser Ringschacht 4 ist u-förmig ausgebildet. Zwischen dem Randbereich der Bodenplatte 1.2 und der zur Bodenplatte 1.2 weisenden Wandung des u-förmigen Ringschachtes 4 ist eine flüssigkeitsdichte Folie 6 so angeordnet, dass sie unter dem Ringschacht 4 bis an die Oberfläche des Erdreiches führt, wobei zwischen ihr und dem Ringschacht 4 ein Bereich geschaffen ist, welche mit Drainagematerial 7 aufgefüllt ist. Die Folie 6 und der Ringschacht 4 mit seinem zur Bodenplatte 1 weisenden oberen Randbereich weisen eine feste flüssigkeitsdichte Verbindung mit der Bodenplatte 1.2.auf. Somit ist sichere Aufnahmewanne für eventuell aus dem Flüssigkeitsbehälter heraustretende Flüssigkeiten nachträglich geschaffen worden.

Für eine Leckageerkennung ist eine flüssigkeitsdichte Folie 6 und ein darüber angeordnetes flächendeckendes Vlies 8 um den unteren Bereich der Behälterwandung 1.1 geschlossen und umlaufend angeordnet.

Das Vlies 8 dient dem mechanischen Schutz der Folie 6 und ist auch in der Lage geringe Mengen von Leckagen aufzusaugen. Die Fläche von Vlies 8 und Folie 6 sind mittels einer flüssigkeitsdichten Verbindung 9 an der Behälterwand befestigt. Die Befestigung erfolgt flüssigkeitsdicht, so dass das Eindringen von klimabedingtem Wasser oder Feuchtigkeit weitestgehend verhindert wird. Die Anordnung von Vlies 8 und Folie 6 ist so ausgebildet, dass deren unterer Randbereich in dem nach oben offenen Ringschacht 4 umlaufend mündet. Dadurch gelangen Leckagen ungehindert in den Ringschacht und werden von ihm aufgenommen. Sollte die Leckage eine größere Dimension annehmen ist zu Sicherheit das Drainagematerial in der Lage, die Leckage aufzunehmen und zu binden, so dass ein Eindringen in das Erdreich vermieden wird.

Für die Überwachung der Dichtheit des Flüssigkeitsbehälters 1 sind Überwachungselektroden 2 im System angeordnet. Im Ringschacht 4 ist dieser im Inneren mit einem Vlies 8 ausgelegt oder beschichtet. An diesem Vlies sind örtlich definiert Überwachungselektroden 2.2 zur Leckageerkennung über nach Außen verlegte Verbindungskabel, welche mit einer Auswerteeinheit in Verbindung stehen, positioniert angeordnet.

Im Ringschacht 4 sind mehrere umlaufen positionierte Überwachungselektroden 2.2 zur Messung des Spannungspotential der dort angesammelten Flüssigkeit angeordnet. Ebenso sind im Flüssigkeitsbehälter 1 Überwachungselektroden 2.1 zur Messung des Spannungspotential der dort gelagerten Flüssigkeit angeordnet. Beide Elektrodentypen 2.1 und 2.2 werden für eine Kontrollmessung gleichzeitig mit einer gleichen definierten Spannung beaufschlagt, um in einer außerhalb des Behälters angeordneten Auswerteeinheit die Potentialdifferenz zwischen den beiden überwachten Flüssigkeiten zu messen. Bei einer bestimmten Potentialdifferenz kann vom Vorhandensein einer Leckage ausgegangen werden und zeitnah auf dieses Ereignis reagiert werden, um Umweltschäden sicher zu vermeiden.

Auch mit dieser Lösung ist eine weitere Möglichkeit geschaffen worden, kostengünstig eine Behälterwanne zu bauen, welche einen zuverlässigen Schutz vor dem Eindringen von Behälter-Leckage-Material in das Erdreich bietet. Gleichzeitig ist ein System geschaffen worden, welches die ständige und zuverlässige sowie unkomplizierte Kontrolle des Flüssigkeitsbehälters 1 zu seiner Dichtheit erlaubt. Ein wesentlicher Vorteil dieser Lösung liegt darin, nachträglich an bereits vorhandenen Flüssigkeits-Behälterbauten eine sichere Leckageerkennung nachzurüsten. Mit der seitlich neben dem Behälter durch die Folie 6 geschaffenen flüssigkeitsdichten Leckage-Wanne muss im Falle einer Leckage nur das Drainagematerial 7, welches die Leckage aufnimmt, entfernt werden. Der Bereich des Erdbodens ist geschützt.

### Bezugszeichenliste

- 1: Flüssigkeitsbehälter
- 1.1: Flüssigkeitsbehälterwand
- 1.2: Flüssigkeitsbehälterboden
- 2: Überwachungselektroden
- 2.1: Überwachungselektroden im Flüssigkeitsbehälter
- 2.2: Überwachungselektrodenaußerhalb des Flüssigkeitsbehälters
- 3: Kontrollschacht
- 4: Ringschacht
- 5: Rohrverbindung zwischen Ringschacht und Kontrollschacht
- 6: flüssigkeitsdichte Folie
- 7: Drainagematerial
- 8: Vlies
- 9: flüssigkeitsdichte Verbindung zwischen Flüssigkeitsbehälter und Folie 6 und/oder Vlies 8
- 10: flüssigkeitsdichte Wanne gebildet aus Folie 6 und Vlies 8

## Patentansprüche

1. Vorrichtung zur Leckage-Erkennung an Flüssigkeitsbehältern mit, das Grundwasser gefährdenden Flüssigkeitsinhalten, wobei im Abstand zur Außenwand des Flüssigkeitsbehälters mehrere gleichmäßig verteilt und vertikal angeordnete Kontrollschächte (3) angeordnet sind, welche bis zum unteren Bodenbereich des Behälterbodens (1.2) verlaufen und im unteren Bereich des Flüssigkeitsbehälters und dort im unteren Bereich der Bodenplatte ein um die gesamte Peripherie des Behälterbodens verlaufender Ringschacht (4) angeordnet ist, wobei die Kontrollschächte bis zum unteren Bereich des Ringschachtes münden, in dem im unteren Bereich des Kontrollschachtes ein Messelement (2.2) zur Detektion der im Ringschacht an dieser Stelle sich angesammelten Flüssigkeit angeordnet ist, **dadurch gekennzeichnet,**
**dass** unter der Bodenplatte (1.2) eine flüssigkeitsdichte Folie (6) und ein darüber angeordnetes flächendeckendes Vlies (8) angeordnet ist, wobei die Fläche von Vlies (8) und Folie (6) so groß ist, dass beim Bau des Behälters die Randbereiche von Beiden (8,6) bis über den Randbereich des Flüssigkeitsbehälterbodens (1.2) und dem unteren Bereich der Behälterwandung (1.1) umgelegt und mittels einer flüssigkeistdicht ausgebildeten Verbindung (9) an der Behälterwand befestigt werden können,
**dass** mittels am und im Flüssigkeitsbehälter angeordneten Überwachungselektroden (2.1, 2.2), welche mit einer definierten elektrischen Ladung beaufschlagt werden, um die elektrische Leitfähigkeit der an die Überwachungselektroden umgebenden Flüssigkeit (Potentialdifferenz) zu messen und auszuwerten,
**dass** mindestens eine Überwachungselektrode (2.1) zur Messung der elektrischen Leitfähigkeit der Flüssigkeit im Flüssigkeitsbehälter (1) angeordnet ist und
**dass** beide Elektroden (2.1) und (2.2) für eine Kontrollmessung gleichzeitig und mit einer gleichen definierten Spannung beaufschlagt werden, um in einer außerhalb des Behälters angeordneten Auswerteeinheit die Potentialdifferenz zwischen beiden überwachten Flüssigkeiten zu messen und um beim Vorhandensein einer definierten Potentialdifferenz eine Leckage feststellen zu können.

2. Vorrichtung zur Leckage-Erkennung an Flüssigkeitsbehältern nach dem Anspruch 1, **dadurch gekennzeichnet, dass** die Kontrollschächte (3) zur Aufnahme von Leckagen der Behälterwandung (1.1) mit dem Ringschacht (3) über eine Rohrverbindung (5) im Bodenbereich ((1.2) verbunden angeordnet sind.

3. Vorrichtung zur Leckage-Erkennung an Flüssigkeitsbehältern nach einem der Ansprüche 1 und 2, **dadurch gekennzeichnet, dass** der Ringschacht (4) nach oben offen jedoch mit der Behälteraußenwand (1.1) umlaufend flüssigkeitsdicht verbunden ist.

4. Vorrichtung zur Leckage-Erkennung an Flüssigkeitsbehältern nach dem Anspruch 3, **dadurch gekennzeichnet, dass** der Ringschacht (4) als ein nach unten abgedichtetes Drainagerohr ausgebildet ist, welches im abgedichteten Bereich mit der Behälteraußenwand (1.1) umlaufend und flüssigkeitsdicht verbunden ist.

5. Vorrichtung zur Leckage-Erkennung an Flüssigkeitsbehältern nach einem dem Anspruch 3, **dadurch gekennzeichnet, dass** der Ringschacht (4) aus einer muldenförmig ausgebildeten Folie (6) besteht, welche mit der Behälteraußenwand (1.1) umlaufend flüssigkeitsdicht verbunden ist.

6. Vorrichtung zur Leckage-Erkennung an Flüssigkeitsbehältern nach einem dem Anspruch 3, **dadurch gekennzeichnet, dass** der Ringschacht (4) aus einer elektrisch leitfähigen Folie (6) ausgebildet ist oder der Ringschacht (4) in seinem Inneren mit dieser Folie ausgelegt oder beschichtet ist und an dieser Folie örtlich definiert elektrische Messsonden (7) zur Leckageerkennung über nach Außen verlegte Verbindungskabel, welche mit einer Auswerteeinheit in Verbindung stehen, positioniert angeordnet sind.

7. Vorrichtung zur Leckage-Erkennung an Flüssigkeitsbehältern nach einem dem Anspruch 3, **dadurch gekennzeichnet, dass** der Ringschacht (4) in seinem Inneren mit einem Vlies (8) ausgelegt oder beschichtet ist und an diesem Vlies örtlich definierte Überwachungselektroden (2.2) zur Leckageerkennung über nach Außen verlegte Verbindungskabel, welche mit einer Auswerteeinheit in Verbindung stehen, positioniert angeordnet sind.

8. Vorrichtung zur Leckage-Erkennung an Flüssigkeitsbehältern nach einem der Ansprüche 1 bis 7, **dadurch gekennzeichnet, dass** an der äußeren Peripherie der Behälteraußenwand und um den Behälter umlaufend ein Drainagevlies (8) mit einer darüber angeordneten Leckerkennungsfolie (6) so fest angeordnet sind, dass die oberen Randbereiche von Leckerkennungsfolie (6) und Drainagevlieses (8) umlaufend fest und mit einer flüssigkeitsdichten Verbindung (9) mit der Behälterwand (1.1) verbunden sind und mit den unteren Randbereichen von (6 und 8) zur Abführung von Leckagen im oberen Bereich des Ringschachtes (4) münden.

9. Vorrichtung zur Leckage-Erkennung an Flüssigkeitsbehältern nach einem der Ansprüche 1 bis 7, **dadurch gekennzeichnet, dass** unter dem Behälterboden (1.2) des Flüssigkeitsbehälters (1) bis hin zur oberhalb des als Drainagerohr ausgebildeten Ringschachtes (4) verlaufenden äußeren Peripherie der Behälteraußenwand und um den Behälter umlaufend ein Drainagevlies (8) mit einer darunter und im Randbereich nach außen sichtbar angeordneten Leckerkennungsfolie (6) so fest angeordnet sind, dass die oberen Randbereiche von Leckerkennungsfolie (6) und Drainagevlieses (8) umlaufend fest und flüssigkeitsdicht mit der Behälterwand (1.1) verbunden sind.

## Claims

1. A device for detecting leaks in liquid containers containing liquid contents that are hazardous to groundwater, wherein a plurality of evenly distributed and vertically arranged inspection shafts (3) are arranged at a distance from the outer wall of the liquid container, which shafts extend to the lower base region of the container base (1.2), and an annular shaft (4) running around the entire circumference of the container base is arranged in the lower region of the liquid container and there in the lower region of the base plate, wherein the inspection shafts open to the lower region of the annular shaft, in which a measuring element (2.2) is arranged in the lower region of the inspection shaft for detecting the liquid that has accumulated in the annular shaft at this location, **characterized in that**
a liquid-tight film (6) and a surface-covering fleece (8) arranged above it are arranged under the base plate (1.2), the surface of the fleece (8) and film (6) being so large that, during construction of the container, the edge regions of both (8,6) can be folded over to above the edge region of the liquid container base (1.2) and the lower region of the container wall (1.1) and can be attached to the container wall by a connection (9) designed to be liquid-tight,
**that** by means of monitoring electrodes (2.1, 2.2) arranged on and in the liquid container, to which a defined electrical charge is applied in order to measure and evaluate the electrical conductivity of the liquid surrounding the monitoring electrodes (potential difference),
**that** at least one monitoring electrode (2.1) for measuring the electrical conductivity of the liquid is arranged in the liquid container (1) and
**that** both electrodes (2.1) and (2.2) simultaneously have applied to them the same defined voltage for a control measurement in order to measure the potential difference between the two monitored liquids in an evaluation unit arranged outside the container and to be able to detect a leak if a defined potential difference is present.

2. The device for detecting leaks in liquid containers according to claim 1, **characterized in that** the inspection shafts (3) for detecting leaks in the container wall (1.1) are connected to the annular shaft (3) via a pipe connection (5) in the base region (1.2).

3. The device for detecting leaks in liquid containers according to one of claims 1 and 2, **characterized in that** the annular shaft (4) is open at the top but is connected to the outer wall of the container (1.1) circumferentially in a liquid-tight manner.

4. The device for detecting leaks in liquid containers according to claim 3, **characterized in that** the annular shaft (4) is designed as a drainage pipe sealed at the bottom, which is connected circumferentially and in a liquid-tight manner to the outer wall of the container (1.1) in the sealed region.

5. The device for detecting leaks in liquid containers according to claim 3, **characterized in that** the annular shaft (4) consists of a trough-shaped film (6) which is connected to the outer wall of the container (1.1) circumferentially in a liquid-tight manner.

6. The device for detecting leaks in liquid containers according to claim 3, **characterized in that** the annular shaft (4) is formed from an electrically conductive film (6) or the annular shaft (4) is lined or coated with this film in its interior and electrical measuring probes (7) for leak detection are arranged positioned on this film in a locally defined manner via connecting cables laid to the outside and connected to an evaluation unit.

7. The device for detecting leaks in liquid containers according to claim 3, **characterized in that** the annular shaft (4) is lined or coated with a fleece (8) in its interior and locally defined monitoring electrodes (2.2) for leak detection are arranged positioned on this fleece via connecting cables laid to the outside and connected to an evaluation unit.

8. The device for detecting leaks in liquid containers according to one of claims 1 to 7, **characterized in that** on the outer periphery of the container outer wall and all around the container, a drainage fleece (8) with a leak detection film (6) arranged above it is arranged so firmly that the upper edge regions of the leak detection film (6) and the drainage fleece (8) are firmly connected circumferentially and with a liquid-tight connection (9) to the container wall (1.1) and open with the lower edge regions of (6 and 8) to drain away leaks in the upper region of the annular shaft (4).

9. The device for detecting leaks in liquid containers according to one of claims 1 to 7, **characterized in that** under the container base (1.2) of the liquid container (1) up to the outer periphery of the container outer wall running above the annular shaft (4) designed as a drainage pipe and circumferentially around the container, a drainage fleece (8) with a leak detection film (6) arranged underneath and visible to the outside in the edge region is arranged so firmly that the upper edge regions of the leak detection film (6) and drainage fleece (8) are connected to the container wall (1.1) circumferentially in a firm and liquid-tight manner.

## Revendications

1. Dispositif pour la détection de fuites au niveau de réservoirs pour liquides comportant des liquides menaçant les nappes phréatiques, dans lequel plusieurs puits de contrôle (3) disposés verticalement et de manière à être répartis régulièrement sont disposés à distance de la paroi extérieure du réservoir pour liquides, lesquels puits de contrôle s'étendent jusqu'à la zone de fond inférieure du fond de réservoir (1.2) et un puits annulaire (4) s'étendant sur toute la périphérie du fond de réservoir est disposé dans la zone inférieure du réservoir pour liquides et à cet endroit dans la zone inférieure de la plaque de fond, dans lequel les puits de contrôle débouchent jusque dans la zone inférieure du puits annulaire dans laquelle un élément de mesure (2.2) pour la détection du liquide accumulé dans le puits annulaire à cet endroit est disposé dans la zone inférieure du puits de contrôle, **caractérisé en ce**
**qu'**une feuille (6) étanche aux liquides et un non-tissé (8) recouvrant une surface et disposé sur celle-ci sont disposés sous la plaque de fond (1.2), dans lequel la surface du non-tissé (8) et de la feuille (6) est si grande que, lors de la construction du récipient, les zones de bordure des deux (8, 6) peuvent être rabattues jusqu'au-dessus de la zone de bordure du fond de récipient pour liquide (1.2) et de la zone inférieure de la paroi de récipient (1.1) et peuvent être fixées à la paroi de récipient au moyen d'un moyen de liaison (9) réalisé de manière à être étanche aux liquides,
**qu'**au moyen d'électrodes de surveillance (2.1, 2.2) disposées sur et dans le réservoir pour liquides, lesquelles sont alimentées par une charge électrique définie afin de mesurer et d'évaluer la conductivité électrique du liquide (différence de potentiel) entourant les électrodes de surveillance,
**qu'**au moins une électrode de surveillance (2.1) est disposée dans le réservoir pour liquide (1) pour la mesure de la conductivité électrique du liquide et
**que** les deux électrodes (2.1) et (2.2) sont alimentées simultanément et avec une même tension définie pour une mesure de contrôle afin de mesurer, dans une unité d'évaluation disposée à l'extérieur du réservoir, la différence de potentiel entre les deux liquides surveillés et de pouvoir constater une fuite en présence d'une différence de potentiel définie.

2. Dispositif pour la détection de fuites au niveau de réservoirs pour liquides selon la revendication 1, **caractérisé en ce que** les puits de contrôle (3) destinés à recevoir des fuites de la paroi de réservoir (1.1) sont disposés de manière à être reliés au puits annulaire (3) par l'intermédiaire d'un moyen de liaison tubulaire (5) dans la zone de fond (1.2).

3. Dispositif pour la détection de fuites au niveau de réservoirs pour liquides selon l'une des revendications 1 et 2, **caractérisé en ce que** le puits annulaire (4) est ouvert vers le haut mais est relié à la paroi extérieure de réservoir (1.1) de manière à être étanche aux liquides sur la périphérie.

4. Dispositif pour la détection de fuites au niveau de réservoirs pour liquides selon la revendication 3, **caractérisé en ce que** le puits annulaire (4) est réalisé sous la forme d'un tube de drainage rendu étanche vers le bas qui est relié à la paroi extérieure de réservoir (1.1) dans la zone rendue étanche sur la périphérie et de manière à être étanche aux liquides.

5. Dispositif pour la détection de fuites au niveau de réservoirs pour liquides selon l'une des revendications 3, **caractérisé en ce que** le puits annulaire (4) est constitué d'une feuille (6) réalisée en forme d'auge qui est reliée à la paroi extérieure de réservoir (1.1) de manière à être étanche aux liquides sur la périphérie.

6. Dispositif pour la détection de fuites au niveau de réservoirs pour liquides selon l'une des revendications 3, **caractérisé en ce que** le puits annulaire (4) est réalisé à partir d'une feuille (6) électriquement conductrice ou le puits annulaire (4) est recouvert ou revêtu de ladite feuille à l'intérieur et des sondes de mesure électriques (7) définies localement pour la détection de fuites sont disposées de manière à être positionnées sur ladite feuille par l'intermédiaire de câbles de liaison posés vers l'extérieur et connectés à une unité d'évaluation.

7. Dispositif pour la détection de fuites au niveau de réservoirs pour liquides selon l'une des revendications 3, **caractérisé en ce que** le puits annulaire (4) est recouvert ou revêtu d'un non-tissé (8) à l'intérieur et des électrodes de surveillance (2.2) définies localement pour la détection de fuites sont disposées de manière à être positionnées sur ledit non-tissé par l'intermédiaire de câbles de liaison posés vers l'extérieur et connectés à une unité d'évaluation.

8. Dispositif pour la détection de fuites au niveau de réservoirs pour liquides selon l'une des revendications 1 à 7, **caractérisé en ce qu'**un non-tissé de drainage (8) comportant une feuille de détection de fuites (6) disposée sur celui-ci est disposé de manière fixe sur la périphérie extérieure de la paroi extérieure de réservoir et autour du réservoir sur la périphérie de telle sorte que les zones de bordure supérieures de la feuille de détection de fuites (6) et du non-tissé de drainage (8) sont fixes sur la périphérie et reliées à la paroi de réservoir (1.1) avec un moyen de liaison (9) étanche aux liquides et débouchent avec les zones de bordure inférieures de (6 et 8) pour l'évacuation de fuites dans la zone supérieure du puits annulaire (4).

9. Dispositif pour la détection de fuites au niveau de réservoirs pour liquides selon l'une des revendications 1 à 7, **caractérisé en ce que** sous le fond du réservoir (1.2) du réservoir de liquide (1) jusqu'à la périphérie extérieure de la paroi extérieure de réservoir, laquelle périphérie s'étend au-dessus du puits annulaire (4) réalisé sous forme de tube de drainage, et autour du réservoir est disposé de manière fixe un non-tissé de drainage (8) comportant une feuille de détection de fuites (6) disposée en dessous de celui-ci et visible vers l'extérieur dans la zone de bordure, de telle sorte que les zones de bordure supérieures de la feuille de détection de fuites (6) et du non-tissé de drainage (8) sont fixes sur la périphérie et reliées de manière étanche aux liquides à la paroi de réservoir (1.1).
